# EUROPÄISCHE PATENTSCHRIFT

(11) **EP 1 142 683 B1**
(45) Veröffentlichungstag und Bekanntmachung des Hinweises auf die Patenterteilung: **11.04.2007**
(21) Anmeldenummer: 01101886.8
(22) Anmeldetag: 27.01.2001
(51) Int. Cl.: B29C 44/04, B29C 44/58

(54) **Formwerkzeug für Schaumformkörper**
Mould for foam article
Moule d'un article en mousse

(30) Priorität: 03.04.2000 DE 10016350
(43) Veröffentlichungstag der Anmeldung: 10.10.2001
(73) Patentinhaber: R. Hullmann GmbH, 49536 Lienen (DE)
(72) Erfinder: Kleine Niesse, Manfred, 49536 Lienen (DE); Hullmann, Ralph, 49536 Lienen (DE)
(74) Vertreter: Busse & Busse Patentanwälte

(56) Entgegenhaltungen:
- DE-A- 2 052 907
- GB-A- 2 306 910
- US-A- 4 115 170
- PATENT ABSTRACTS OF JAPAN vol. 014, no. 382 (C-0749), 17. August 1990 (1990-08-17) & JP 02 140107 A (NISHIKAWA KASEI KK), 29. Mai 1990 (1990-05-29)

## Beschreibung

Die Erfindung betrifft ein Formwerkzeug für die Herstellung eines Schaumformkörpers aus wenigstens zwei verschiedenartigen Schäumen, insbesondere für die Herstellung eines Sitzkörpers für z.B. Kraftfahrzeuge nach dem Oberbegriff des Anspruchs 1.

Schaumformkörper werden in der Regel mit Formwerkzeugen hergestellt, die sich aus zumindest zwei Formteilen zusammensetzen und einen im wesentlichen abgeschlossenen Hohlraum ausbilden. In das Formwerkzeug wird das aufschäumbare Material eingebracht, und nach Verschließen der Form wird durch Beheizung des Formwerkzeugs ein Aufschäumen des Schaummaterials ausgelöst.

Vielfach ist es erwünscht, Schaumformkörper aus mehreren verschiedenartigen Schäumen herzustellen, um unterschiedlichen Bereichen des Schaumformkörpers voneinander abweichende Eigenschaften zu verleihen. So ist z.B. bei den Sitzflächen oder Rückenlehnen von Kfz-Sitzen im Sitz- oder Rückenbereich aus Gründen der Bequemlichkeit ein weiches Material erwünscht, wohingegen die Seitenbereiche und die der auf dem Sitz Platz nehmenden Person abgewandten rückwärtigen Bereiche möglichst aus einem Schaum höherer Härte bestehen sollten, um den gewünschten Seitenhalt und die notwendige Stabilität des Sitzkörpers zu gewährleisten.

In der Praxis werden derartige Schaumformkörper meist noch durch Verkleben zweier vorgefertigter Schaumkörperteile aus den verschiedenen Schäumen hergestellt, oder indem zunächst ein kleineres Schaumformkörperteil aus dem meist weicheren Schaum hergestellt und dann in die Gesamtform zur Umschäumung mit dem härteren Schaum eingelegt wird. Dazu sind jeweils mehrere Arbeitsschritte und auch Aushärte- und Wartezeiten notwendig, die die Herstellung aufwendig und teuer machen. Es ist auch bekannt, die verschiedenen Schaummaterialien unmittelbar nacheinander in den für sie vorgesehenen Bereich der Hohlform einzubringen und dann gemeinsam aufzuschäumen. Dabei kann jedoch keine genaue Abgrenzung der einzelnen Schaummaterialien erfolgen, so daß sich die durch die verschiedenen Schäume gebildeten Bereiche teilweise zueinander verschieben und so beispielsweise das weichere Schaummaterial in einen Bereich gelangt, in dem eigentlich härteres Material angeordnet sein sollte oder umgekehrt. Auch tritt oft in größeren Bereichen eine stärkere Vermischung der Schaummaterialien ein. Der Schaumformkörper erhält dadurch vom Sollwert abweichende Eigenschaften und ist im übrigen nicht gleichmäßig reproduzierbar.

Es wurden daher Formwerkzeuge entwickelt, bei denen verschiedene Bereiche innerhalb der Hohlform durch eine sich durch die Form hindurcherstreckende Begrenzungsmembran für verschiedene Schäume voneinander getrennt werden. Solche Formwerkzeuge sind beispielsweise in der DE-A 2 052 907 oder der GB-A-2 306 910 gezeigt. Die Begrenzungsmembran ist dabei zwischen den Formteilen verklemmt oder an Aufnahmemitteln eines Formteils so festgelegt, daß sie sich gerade gespannt durch die Form hindurcherstreckt. Die JP-A-02 140 107 zeigt ebenfalls ein ähnliches Formwerkzeug mit Aufnahmemitteln für eine Begrenzungsmembran. Die Membran ist zwischen den seitlichen Aufnahmemitteln so gespannt, daß sie sich quer zur Form jeweils geradlinig durch diese hindurcherstreckt. Mit den vorbekannten Formwerkzeugen können zwar unterschiedliche Schäume voneinander abgetrennt werden, jedoch ist es wegen der zumindest in einer Richtung geradlinigen Verspannung der Begrenzungsmembran nicht möglich, in verschiedenen Dimensionen konturierte unterschiedliche Schaumbereiche zu erhalten.

Die Erfindung befaßt sich daher mit dem Problem, ein Formwerkzeug für die Herstellung von Schaumformkörpern anzugeben, das auf einfache Weise die Herstellung von Schaumformkörpern mit präzise voneinander abgegrenzten, konturierten -Bereichen aus verschiedenartigen Schaummaterialien ermöglicht. Dieses Problem wird erfindungsgemäß durch ein Formwerkzeug mit den Merkmalen des Anspruchs 1 gelöst.

Durch die Fixierung der Begrenzungsmembran mit Aufnahmemitteln und Positionierungselementen an unterschiedlichen Formteilen kann diese sich derart konturiert durch die Hohlform erstreckend festgelegt werden, daß sie die für die verschiedenen Schäume vorgesehenen Formbereiche insoweit voneinander abgrenzt, daß bei der Herstellung des Schaumformkörpers keine unerwünschte Verschiebung dieser Bereiche und keine über ein eventuell angestrebtes Maß hinausgehende Vermischung der verschiedenartigen Schäume erfolgt, wobei nicht nur geradlinige Bereichsabtrennungen möglich sind.

Für die Membran, die im fertigen Schaumformkörper verbleibt und bei oder nach dem Öffnen des Formwerkzeuges zum Entformen des Schaumformkörpers wieder von den Aufnahmemitteln gelöst wird, muß ein Material gewählt werden, das eine gute Verbindung mit den verschiedenen Schaummaterialien zu beiden Seiten eingeht. Bestimmte Folienwerkstoffe könnten dafür geeignet sein. Eine besonders haltbare und feste Verbindung der beiden aneinandergrenzenden Schäume mit der Membran und miteinander läßt sich erhalten, wenn die Begrenzungsmembran Durchbrechungen aufweist, die von zumindest einem der verwendeten Schäume wenigstens geringfügig durchdringbar sind, so daß in einer Grenzzone an der Membran eine in diesem Fall gewünschte geringfügige Durchmischung der beiden Materialien erfolgt und diese miteinander und mit der Membran verbindet. Besonders vorteilhaft kann die Begrenzungsmembran dabei durch ein Netzwerk oder textiles Gewebe oder Gewirke ausgebildet sein. In diesem Fall können die Freiräume zwischen einzelnen Fasern des Netzwerks, Gewebes oder Gewirkes die Durchbrechungen bilden, deren Größe, Anzahl und Verteilung durch die Wahl des Membranmaterials vorgegeben werden kann.

Weitere Vorteile und Einzelheiten ergeben sich aus den Unteransprüchen und einem in den Zeichnungen dargestellten Ausführungsbeispiel der Erfindung, das im folgenden beschrieben wird; es zeigen:

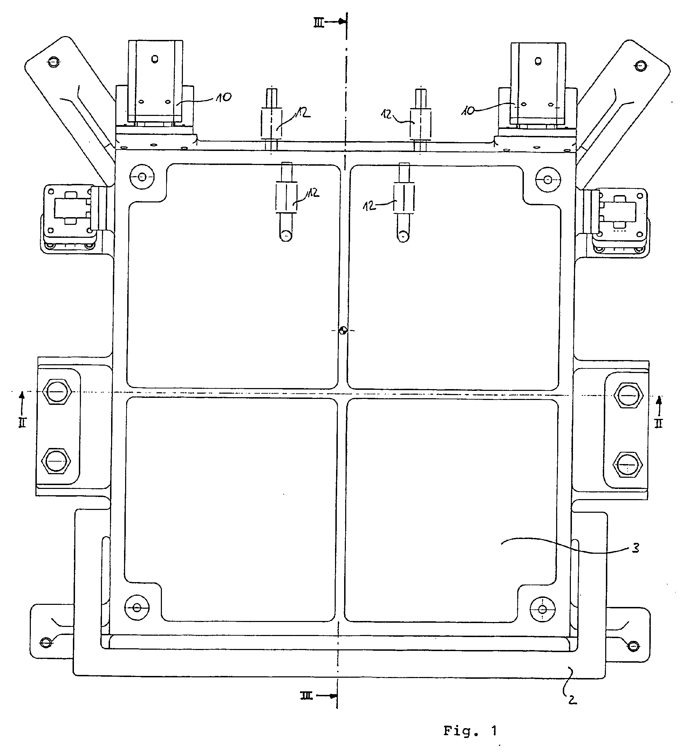

- Fig. 1: eine Draufsicht auf ein erfindungsgemäßes Formwerkzeug,

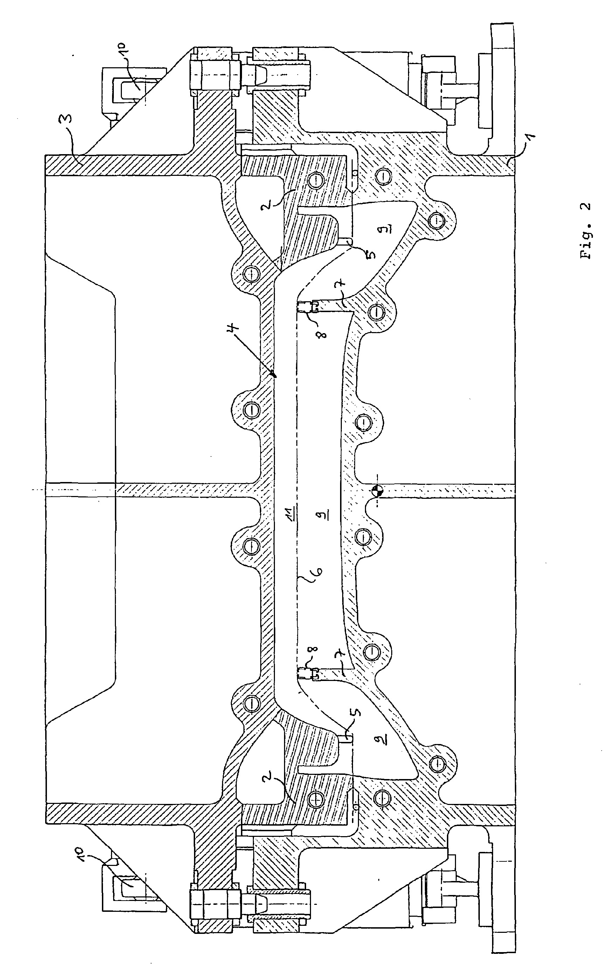

- Fig. 2: einen Schnitt in Richtung II-II durch den Gegenstand aus Fig. 1,
- Fig. 3: einen Schnitt in Richtung III-III durch den Gegenstand aus Fig. 1,
- Fig. 4: eine Ansicht entsprechend Fig. 3 bei vollständig geöffnetem Formwerkzeug und
- Fig. 5: den Gegenstand aus Fig. 4 mit geschlossenem Membranträger.

Das dargestellte Formwerkzeug ist für die Herstellung von Sitzflächenformkörpern für Kraftfahrzeuge ausgelegt. Es weist drei Formteile 1, 2, 3, nämlich ein Unterteil 1, einen Membranträger 2 und ein Oberteil 3, auf, die sich zusammengesetzt zu einer Hohlform 4 ergänzen, die in umgedrehter Position, d.h. mit der Sitzfläche nach unten, die Form des herzustellenden Sitzes hat.

Der Membranträger 2 ist rahmenartig ausgebildet und zwischen dem Unterteil 1 und dem Oberteil 3 angeordnet. An dem Membranträger 2 befinden sich Aufnahmemittel 5, an denen die Begrenzungsmembran 6 festgelegt wird. Die Aufnahmemittel 5 sind dornartig ausgebildet und haben jeweils einen nicht dargestellten Befestigungskopf, der die Begrenzungsmembran 6 beispielsweise durch Verhaken aufnimmt.

Da sich die Begrenzung zwischen den verschiedenartigen Schäumen bei der dargestellten Ausführungsform nicht überall linear durch das Formwerkzeug hindurch erstrecken soll, wirken die Aufnahmemittel 5 mit Positionierungselementen 7 zusammen, und die Begrenzungsmembran 6 wird so bei geschlossenem Formwerkzeug in einer vom Planaren abweichenden Formkontur fixieren. Bei dem dargestellten Formwerkzeug liegt die Begrenzungsmembran 6 dann auf Kunststoffklammern, sogenannten Softstriphaltern 8 auf, die an die vorzugsweise stegartigen Positionierungselemente 7 angeklemmt sind und beim Entformen wie auch die Begrenzungsmembran 6 im fertigen Schaumformkörper verbleiben. An den Softstriphaltern 8 kann dann bei dem fertigen Sitz beispielsweise die Stoff- oder Lederbespannung festgeklemmt werden.

Um eine definierte Begrenzung zwischen den verschiedenen Schaummaterialien zu erhalten, ist es vorteilhaft, wenn die Begrenzungsmembran 6 über die Aufnahmemittel 5 gespannt ist. Das Spannen der Begrenzungsmembran 6 kann auch wie dargestellt in Zusammenwirkung mit den Positionierungselementen 7 geschehen, die dazu an einem anderen Formteil, hier an dem Unterteil 1, als die Aufnahmemittel 5 angeordnet sind, in das Innere der Hohlform 4 vorstehen und dort gegen die Begrenzungsmembran 6 drücken.

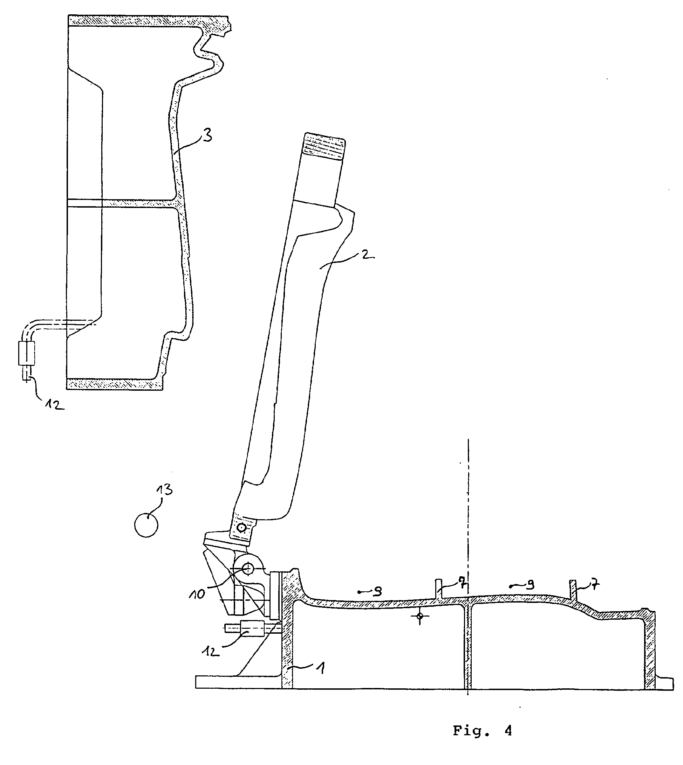

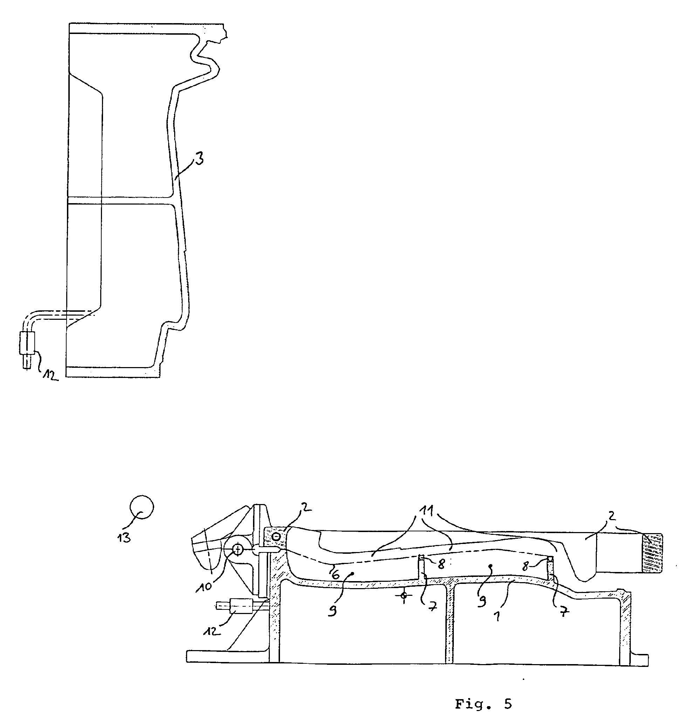

Die Verwendung des Formwerkzeugs zur Herstellung eines Schaumformkörpers wird nachfolgend anhand der Figuren 4 und 5 erläutert. Das Formwerkzeug wird zunächst vollständig geöffnet, wie in Fig. 4 dargestellt. In die Bereiche 9 der Hohlform 4 wird zunächst das weichere Schaummaterial eingebracht. Sodann wird der an seinen Aufnahmemitteln 5 bereits mit der Begrenzungsmembran 6 bestückte Membranträger auf das Unterteil 1 in die in Fig. 5 dargestellte Position abgesenkt. Um eine korrekte Positionierung zu erleichtern, ist der Membranträger 2 dazu vorzugsweise schwenkbar über ein Lager 10 mit dem Unterteil 1 verbunden.

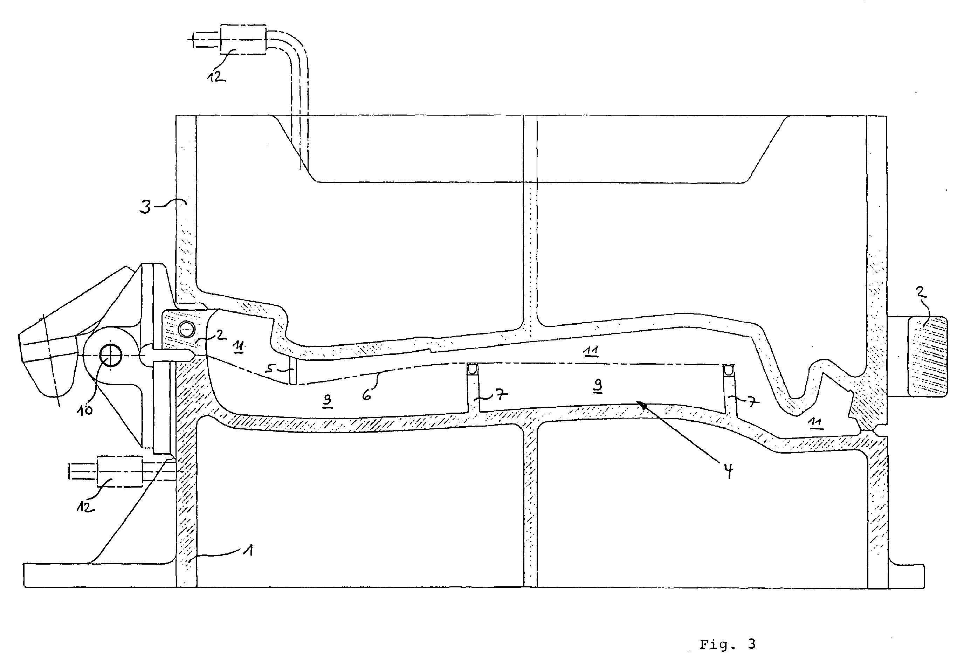

In die so abgegrenzten Bereiche 11 oberhalb der Begrenzungsmembran 6 wird dann das härtere Schaummaterial eingebracht, das Oberteil 3 des Formwerkzeugs geschlossen (sh. Fig. 3) und das Formwerkzeug über geeignete Wärmezuführungen 12 erhitzt, um das thermische Aufschäumen der Schaummaterialien auszulösen.

Das Oberteil 3 ist meist auch in einer definierten Position zu dem Unterteil 1 um eine Achse 13 schwenkbar fixiert. Die Achse 13 ist jedoch nicht an den Formteilen 1, 3 ausgebildet, sondern am nicht dargestellten Grundaufbau der Fertigungsanlage.

Der Membranträger des Formwerkzeugs übergreift bei der dargestellten Ausführungsform das Unterteil und das Oberteil 3 teilweise, im Bereich der Sitzhinterkante, so daß sich bei geschlossenem Formwerkzeug das Unterteil 1 und das Oberteil 3 dort direkt berühren. Dies hat den Vorteil, daß dort nur eine Kontaktstellte dicht abgeschlossen werden muß. Diese Ausführungsform bietet sich insbesondere für Schaumformkörper an, bei denen in einem bestimmten Bereich nur ein Schaummaterial erwünscht ist. Dies ist im Bereich der Hinterkante des mit dem abgebildeten Formwerkzeug geformten Sitzes das härtere Schaummaterial.

Neben der dargestellten Ausführungsform können erfindungsgemäße Formwerkzeuge auch andere Ausgestaltungen aufweisen und aus zwei oder mehr Formteilen bestehen. Bei der Ausbildung aus lediglich zwei Formteilen müssen jedoch in beide Teile Schaummaterialien eingebracht werden, bevor die Begrenzungsmembran an den Aufnahmemitteln festgelegt werden kann, was die Fertigung verlangsamen kann. Das gleiche gilt für drei- oder mehrteilige Formwerkzeuge, bei denen der Membranträger das äußerste Formteil bildet und nicht zwischen zwei weiteren Formteilen angeordnet ist.

Zusammenfassend läßt sich mit dem erfindungsgemäßen Formwerkzeug die Herstellung von Schaumformkörpern aus verschiedenartigen Schäumen erheblich vereinfachen, und es können Schaumformkörper hergestellt werden mit an genau definierten Positionen exakt voneinander abgegrenzten verschiedenen Schaummaterialien.

## Patentansprüche

1. Formwerkzeug für die Herstellung eines Schaumformkörpers aus wenigstens zwei verschiedenartigen Schäumen, insbesondere für die Herstellung eines Sitzkörpers für beispielsweise Kraftfahrzeuge, mit mehreren Formteilen, die sich zusammengesetzt zu einer ausschäumbaren Hohlform für den Schaumformkörper ergänzen, wobei wenigstens eines der Formteile Aufnahmemittel (5) zur Aufnahme einer im herzustellenden Schaumformkörper verbleibenden Begrenzungsmembran (6) aufweist, die sich durch die Hohlform (4) erstreckt und beim Ausschäumen der Hohlform (4) die in unterschiedliche Formbereiche (9, 11) eingebrachten verschiedenartigen Schäume im wesentlichen voneinander abgrenzt, **dadurch gekennzeichnet, daß** die Aufnahmemittel (5) mit Positionierungselementen (7) zusammenwirken und die Begrenzungsmembran (6) so in einer Formkontur fixieren, wobei die Positionierungselemente (7) an einem anderen Formteil als die Aufnahmemittel (5) angeordnet sind.

2. Formwerkzeug nach Anspruch 1, **dadurch gekennzeichnet, daß** die Begrenzungsmembran (6) Durchbrechungen aufweist, die von dem zur Herstellung des Schaumformkörpers verwendeten Schaum wenigstens geringfügig durchdringbar sind.

3. Formwerkzeug nach Anspruch 1 oder 2, **dadurch gekennzeichnet, daß** die Begrenzungsmembran (6) ein Netzwerk oder ein textiles Gewebe oder Gewirke ist.

4. Formwerkzeug nach einem der Ansprüche 1 bis 3, **dadurch gekennzeichnet, daß** das Formwerkzeug wenigstens drei Formteile (1, 2, 3) aufweist, von denen eines als Membranträger (2) rahmenartig ausgebildet ist.

5. Formwerkzeug nach Anspruch 4, **dadurch gekennzeichnet, daß** der Membranträger (2) zwischen zwei Formteilen (1, 3) angeordnet ist.

6. Formwerkzeug nach Anspruch 5, **dadurch gekennzeichnet, daß** der Membranträger (2) mit wenigstens einem der anderen Formteile (1, 3) schwenkbar gelagert verbunden ist.

7. Formwerkzeug nach Anspruch 5 oder 6, **dadurch gekennzeichnet, daß** der Membranträger (2) die benachbarten Formteile (1, 3) zumindest bereichsweise übergreift, so **daß** sich die benachbarten Formteile (1, 3) bei geschlossenem Formwerkzeug in diesem Bereich berühren und die Hohlform (4) nach außen begrenzen.

8. Formwerkzeug nach einem der Ansprüche 1 bis 7, **dadurch gekennzeichnet, daß** die Positionierungsmittel (7) steg- oder rippenartig ausgebildet sind und in das Innere der Hohlform (4) vorstehen.

9. Formwerkzeug nach einem der Ansprüche 1 bis 8, **dadurch gekennzeichnet, daß** die Aufnahmemittel (5) dornartig mit einem Befestigungskopf ausgebildet sind.

10. Formwerkzeug nach einem der Ansprüche 1 bis 9, **dadurch gekennzeichnet, daß** die Begrenzungsmembran (6) über die Aufnahmemittel (5) gespannt ist.

## Claims

1. A moulding tool for the production of a foam moulded body of at least two different kinds of foams, in particular for the production of a seat body for motor vehicles for example, with several mould parts, which complement one another when assembled to form a foam-expandable hollow mould for the foam moulded body, wherein at least one of the mould parts has receiving means (5) for receiving a demarcation membrane (6) remaining in the foam moulded body to be produced, which demarcation membrane extends through the hollow mould (4) and which, during the foam expansion of the hollow mould (4), essentially demarcates from one another the foams of different kinds introduced into different mould regions (9, 11), **characterised in that** the receiving means (5) cooperate with positioning elements (7) and thus fix the demarcation membrane (6) in a mould contour, the positioning elements (7) being arranged on a different mould part from the receiving means (5).

2. The moulding tool according to claim 1, **characterised in that** the demarcation membrane (6) has perforations, which can be penetrated at least slightly by the foam used to produce the foam moulded body.

3. The moulding tool according to claim 1 or 2, **characterised in that** the demarcation membrane (6) is a netting or a textile fabric or a knitted fabric.

4. The moulding tool according to any one of claims 1 to 3, **characterised in that** the moulding tool comprises at least three mould parts (1, 2, 3), whereof one is designed frame-like as a membrane carrier (2).

5. The moulding tool according to claim 4, **characterised in that** the membrane carrier (2) is arranged between two mould parts (1, 3).

6. The moulding tool according to claim 5, **characterised in that** the membrane carrier (2) is connected mounted in a swivellable manner to at least one of the other mould parts (1, 3).

7. The moulding tool according to claim 5 or 6, **characterised in that** the membrane carrier (2) overlaps the neighbouring mould parts (1, 3) at least in some areas, so that, when the moulding tool is closed, the neighbouring mould parts (1, 3) are in contact in this region and demarcate the hollow mould (4) to the exterior.

8. The moulding tool according to any one of claims 1 to 7, **characterised in that** the positioning means (7) are designed web-like or rib-like and project into the interior of the hollow mould (4).

9. The moulding tool according to any one of claims 1 to 8, **characterised in that** the receiving means (5) are designed pin-like with a fixing head.

10. The moulding tool according to any one of claims 1 to 9, **characterised in that** the demarcation membrane (6) is stretched over the receiving means (5).

## Revendications

1. Moule pour la fabrication d'un article formé en mousse d'au moins deux mousses de types différents, en particulier pour la fabrication d'un corps de siège destiné, par exemple, à des automobiles, avec plusieurs parties de moule, qui se réunissent l'une à l'autre en un moule creux pouvant être rempli de mousse pour l'article en mousse au moins l'une des parties de moule présentant au moins un moyen de réception pour la réception d'une membrane de séparation (6) logée dans l'article en mousse à fabriquer, qui s'étend à travers le moule creux (4) et lors du remplissage avec de la mousse du moule creux (4) sépare essentiellement l'une de l'autre les mousses de types différents introduites dans les différentes régions de moule (9, 11), **caractérisé en ce que**, les moyens de réception (5) coopèrent avec des éléments de positionnement (7) et fixent de cette façon dans un contour de moule la membrane de séparation (6), dans lequel les éléments de positionnement (7) sont disposés dans une autre partie de moule que les moyens de réception (5).

2. Moule selon la revendication 1, **caractérisé en ce que** la membrane de séparation (6) présente des évidements, qui sont au moins légèrement pénétrables par la mousse utilisée pour la fabrication de l'article en mousse.

3. Moule selon la revendication 1 ou 2, **caractérisé en ce que** la membrane de séparation (6) est un maillage ou une maille ou un tissu textile.

4. Moule selon la revendication 1 à 3, **caractérisé en ce que** le moule présente au moins trois partie de moules (1, 2, 3), dont une est formée d'un support de membrane (2) en forme de cadre.

5. Moule selon la revendication 4, **caractérisé en ce que** le support de membrane (2) est agencé entre deux parties de moule (1, 3).

6. Moule selon la revendication 5, **caractérisé en ce que** le support de membrane (2) est relié à pivotement avec au moins l'une des autres parties de moule (1, 3).

7. Moule selon la revendication 5 ou 6, **caractérisé en ce que** le support de membrane (2) recouvre au moins en partie les parties de moules voisines (1, 3), de sorte que les parties de moules voisines (1, 3) entrent en contact dans cette région avec le moule fermé et délimitent le moule creux (4) à l'extérieur.

8. Moule selon l'une des revendications 1 à 7, **caractérisé en ce que** les moyens de positionnement (7) sont formés en forme de barre ou de nervure et font saillie à l'intérieur du moule creux (4).

9. Moule selon l'une des revendications 1 à 8, **caractérisé en ce que** les moyens de réception (5) sont formés en forme de pointe avec une tête de fixation.

10. Moule selon l'une des revendications 1 à 9, **caractérisé en ce que** la membrane de séparation (6) est tendue sur les moyens de réception (5).
